# FASCICULE DE BREVET EUROPEEN

(11) **EP 2 673 574 B1**
(45) Date de publication et mention de la délivrance du brevet: **21.10.2015**
(21) Numéro de dépôt: 12710124.4
(22) Date de dépôt: 10.02.2012
(51) Int. Cl.: F24J 3/08

(54) **CAPTEUR GEOTHERMIQUE EN SPIRALE AMELIORE**
VERBESSERTER SPIRALFÖRMIGER ERDKOLLEKTOR
IMPROVED SPIRAL GEOTHERMAL COLLECTOR

(30) Priorité: 11.02.2011 FR 1100432
(43) Date de publication de la demande: 18.12.2013
(73) Titulaire: S.A. RYB, 38590 Saint Etienne de St Geoirs (FR)
(72) Inventeur: BLIN, Marc-Antoine, 38140 Saint Blaise du Buis (FR)
(74) Mandataire: Schuffenecker, Thierry
(86) Numéro de dépôt international: PCT/EP2012/000608
(87) Numéro de publication internationale: WO 2012/107235

(56) Documents cités:
- EP-A1- 2 080 977
- EP-A2- 1 992 886
- DE-U1-202006 010 244
- DE-U1-202008 008 391
- DE-U1-202008 013 524
- DE-U1-202009 011 393
- JP-A- 60 066 062
- JP-A- 2006 010 133
- JP-A- 2007 315 742
- US-A- 5 054 541

## Description

### Domaine technique de l'invention

La présente invention concerne un capteur géothermique en spirale amélioré et notamment une corbeille géothermique aisément transportable et pouvant être installé par une seule personne.

### Etat de la technique

L'épuisement des ressources énergétiques fossiles et le développement des énergies renouvelable a suscité un intérêt grandissant pour la géothermie qui, comme on le sait, constitue un moyen naturel pour le captage des calories présentes dans le sol.

Pour autant, la mise en oeuvre de cette technique récente pose le problème de l'installation du capteur chez l'utilisateur final.

De manière classique l'on connaît le capteur géothermique horizontal consistant à venir poser, dans le jardin du particulier, un réseau de tuyaux enterrés horizontalement dans le sol, à une profondeur comprise entre environ 60cm et 120 cm. Cette technique bien connue présente l'inconvénient de monopoliser une surface significative du jardin de l'usager.

La géométrie verticale permet de réduire l'empiétement au sol du capteur, notamment au moyen d'un capteur à spirale ou encore d'une corbeille géométrique qui est bien adaptée aux maisons individuelles ou au petits immeubles collectifs.

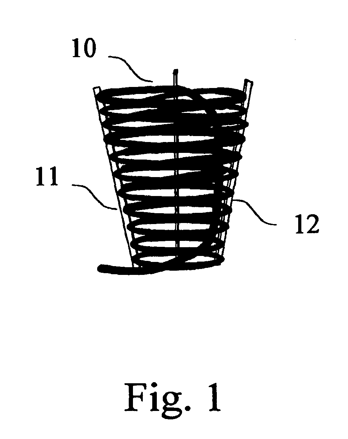

La figure 1 illustre un exemple de corbeille géothermique connue, composée d'une couronne 10 de tuyau en forme de cône, soutenue par quatre supports (11, 12 ...). Cette corbeille peut être enfouie dans le sol avec un empiètement minimum, réduisant ainsi l'impact du chantier sur le jardin d'un particulier ou d'une résidence collective.

Le document DE202008008391U divulgue un échangeur géothermique comportant une couronne de tuyau disposée en spirales, et doté d'au moins trois supports (2, 3, 4) longilignes comportant sur leur longueur une série de trous destinés chacun à être traversé par une spirale élémentaire de manière à réaliser une structure complète stable.

Si ces capteurs s'avèrent bien commode une fois en place, il convient d'observer cependant que sa mise en oeuvre est moins aisée.

En premier lieu, comme on le voit sur le schéma, un tel capteur, s'il est compact une fois en terre comparativement aux systèmes horizontaux, reste néanmoins volumineux à transporter.

En second lieu, dans le cas où ce capteur est transporté dans un volume réduit, il doit être monté sur place avant sa mise en terre Cette opération requiert souvent deux ouvriers pour mettre convenablement en place celui-ci.

Il est donc souhaitable de pouvoir bénéficier d'une solution alternative plus simple à transporter, à mettre en oeuvre et à installer.

Tel est l'objet de la présente invention.

### Exposé de l'invention

La présente invention a pour but de proposer une structure de capteur géothermique en spirale réduisant la surface nécessaire pour le captage des calories du sol.

Un autre but de la présente invention consiste à proposer une structure de capteur géothermique en spirale pouvant être facilement transportée depuis le site de fabrication jusqu'au lieu de mise en oeuvre.

C'est un autre but enfin de la présente invention que de réaliser une corbeille géothermique permettant une mise en oeuvre simplifiée pouvant être réalisée par un seul ouvrier.

L'invention réalise ces buts au moyen d'un échangeur géothermique, comportant une couronne de tuyau disposée en spirales, et doté d'au moins trois supports longilignes comportant sur leur longueur une série de trous destinés chacun à être traversé par une spirale élémentaire de manière à réaliser une structure complète stable, caractérisé en ce que lesdits supports réalisent un maintien en place glissant le long de la spirale de manière à permettre le groupement des supports en deux groupes respectivement droit et gauche dans le but de rendre la structure pliable.

Dans un mode de réalisation particulier, deux supports spécifiques sont orientés à 180 degrés l'un de l'autre et réalisent un maintien en place non glissant tandis que les autres supports sont glissants par rapport aux éléments de spirales auxquels ils sont associés.

Dans un mode de réalisation particulier le nombre de supports est de trois. Alternativement, il pourra être de quatre supports.

Dans un mode de réalisation particulier, la forme de la couronne est sensiblement cylindrique, et comporte une couronne de tuyau polymère flexible (PEHD, PERT, PB, etc...)..

Dans un mode de réalisation particulier, l'un des supports comporte un élément de serrage permettant de venir fixer de manière rigide l'élément de spirale lui correspondant.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre une structure connue de corbeille géothermique basée sur un capteur en spirales verticales.
La figure 2 représente les éléments constitutifs d'un premier mode de réalisation particulier d'un capteur géothermique, sous la forme d'une corbeille géothermique de forme cylindrique, conforme à la présente invention.
La figure 3 illustre un second mode de réalisation d'une corbeille géothermique en position déployée.
La figure 4 illustre le second mode de réalisation de la corbeille géothermique en position repliée facilitant le transport.
La figure 5 illustre la manipulation de la corbeille géothermique, en position semi-repliée par un ouvrier.

### Description d'un mode de réalisation préféré

L'on décrit à présent un mode de réalisaton particulier d'un échangeur géothermique constitué d'un tuyau en polyéthylène haute densité (PEHD) de diamètre quelconque, par exemple 25, 32 ou 40mm. Il est toutefois clair qu'un homme du métier pourra réaliser le capteur avec un diamètre inférieur ou supérieur.

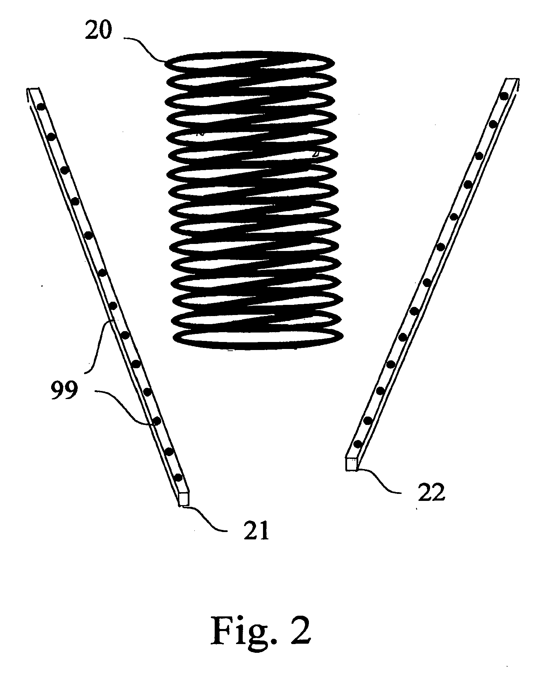

En référence à la figure 2, l'on observe les éléments constitutifs d'un premier mode de réalisation d'un échangeur géothermique, sous la forme d'une corbeille géothermique cylindrique 20, constitué d'un tube de grande longueur, par exemple cent mètres, enroulé en spirale. La figure 2 illustre une spirale de forme cylindrique mais un homme du métier pourra clairement envisager une autre forme, par exemple conique. Le déploiement de la corbeille est néanmoins plus aisé lorsque la forme est cylindrique.

La corbeille géothermique comporte en outre un ensemble de supports longilignes 21 et 22, en matériau quelconque, par exemple en bois, comportant une série d'orifices 99 régulièrement espacés de manière à permettre le passage d'une spirale de la couronne 20..

De manière pratique, l'on pourra réaliser chacun des supports longilignes au moyen de deux éléments en bois, un premier élément doté de rainures perpendiculaires par rapport au plus grand côté, régulièrement espacées dans lesquelles l'on peut venir positionner les éléments de spirales. Lorsque celles-ci sont positionnées, l'on vient alors fixer, au moyen d'agrafes ou par tout moyen approprié, un second élément de même longueur que le premier élément, afin de maintenir les spirales en position.

Un ensemble de trois supports permet de réaliser une structure auto-porteuse que l'on pourra enfouir aisément.

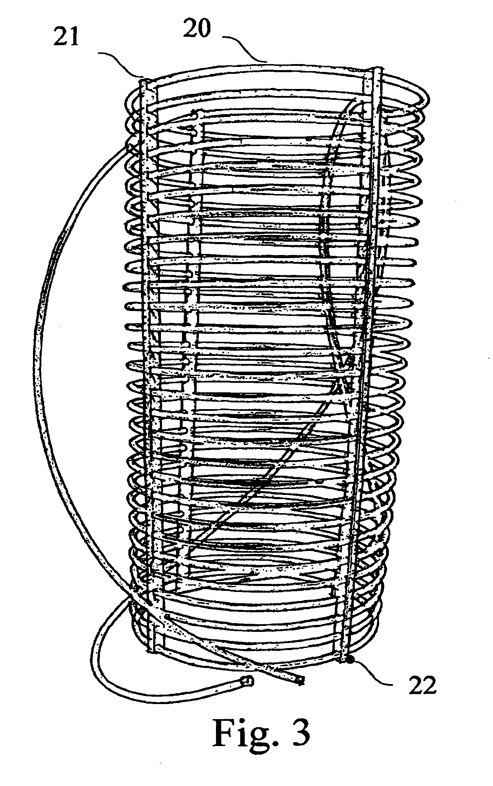

De préférence, la corbeille disposera d'un ensemble de quatres supports comme celle illustrée en figure 3.

Les corbeilles géothermiques des figures 2 et 3 se distinguent des corbeilles connues en ce que les supports réalisent un maintien en place glissant des spirales correspondantes, de manière à permettre de faire glisser les supports - quel que soient le nombre (4 de préférences), le long des spirales pour les regrouper en deux groupes et permettre alors un nouvel effet technique, à savoir rendre la corbeille géothermique pliable.

La figure 3 illustre la structure de la corbeille comportant la couronne de tube 20, et les quatre supports en position symétrique, c'est à dire disposés à environ 90 degrés les uns des autres.

De cette manière, la structure est parfaitement auto-porteuse.

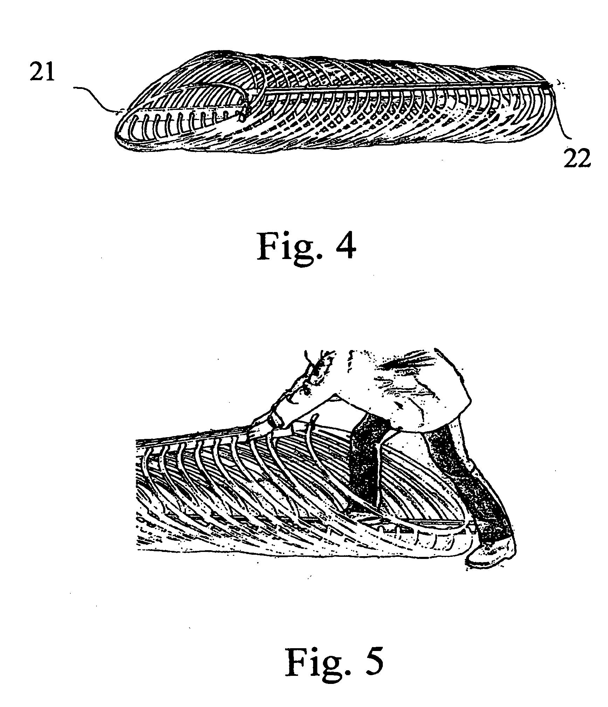

En revanche, lorsque l'on fait glisser les supports le long des spirales de manière à les grouper en deux groupes, respectivement droits et gauche, l'on peut avantageusement aplatir la couronne 20 comme cela est illustré dans la figure 4, ce qui permet de faciliter grandement la manutention et le transport de la couronne...

Cette couronne géothermique peut donc être directement fabriquée chez le constructeur, puis pliée (ou aplatie) et aisément transportée sur le lieu de mise en oeuvre.

En outre, et cela est un avantage particulièrement intéressant, un seul ouvrier s'avère suffisant pour mettre en oeuvre la corbeille géothermique, comme cela est illustré schématiquement dans la figure 5.

Dans un mode de réalisation particulier, l'on pourra doter les supports d'un système de blocage ou serrage permettant de fixer et maintenir en place un ou plusieurs éléments de spirale de manière à rigidifier encore davantage la structure lors de la mise en oeuvre.

Plus simplement, dans un mode de réalisation, la corbeille comporte deux supports disposés à 180 degrés l'un de l'autre, qui sont fixés de manière rigide aux éléments de spirales, tandis que les deux autres supports sont agencés de manière glissante par rapport aux spirales afin de permettre le groupage autour des supports fixes.

L'on réalise ainsi, sans aucune difficulté, une structure pliable , susceptible d'être aisément transportée, et pouvant être aussi facilement dépliée et mise en oeuvre par un seul ouvrier.

Avec la conséquence d'une baisse significative de mise en oeuvre de la corbeille géothermique chez le client.

De manière pratique, la structure pourra présenter un diamètre de 1.1 mètre et une hauteur d'environ 2.30 mètre, le tout étant enterré de façon à ce que la partie supérieure du cylindre arrive à environ un mètre sous le niveau de la surface.

## Revendications

1. Echangeur géothermique comportant une couronne (20) de tuyau disposée en spirales, et doté d'au moins trois supports longilignes (21, 22) comportant sur leur longueur une série de trous (99) destinés chacun à être traversé par une spirale élémentaire (20) de manière à réaliser une structure complète stable, **caractérisé en ce que** lesdits supports (21, 22) réalisent un maintien en place glissant le long de la spirale de manière à permettre le groupement des supports (21, 22) en deux groupes respectivement droit et gauche dans le but de rendre la structure pliable.

2. Echangeur géothermique selon la revendication 1 **caractérisé en ce que** deux supports particuliers (21, 22), orientés à 180 degrés l'un de l'autre, réalisent un maintien en place non glissant tandis que les autres supports (21, 22) sont glissants par rapport aux éléments de spirales auxquels ils sont associés.

3. Echangeur géothermique selon l'une des revendications 1 ou 2 **caractérisé en ce que** le nombre de supports (21, 22) est de trois.

4. Echangeur géothermique selon l'une des revendications 1 ou 2 **caractérisé en ce que** le nombre de supports (21, 22) est de quatre.

5. Echangeur géothermique selon l'une des revendications précédentes **caractérisé en ce que** la couronne (20) est de forme sensiblement cylindrique.

6. Echangeur géothermique selon l'une quelconque des revendications 1 à 4 **caractérisé en ce qu'**il présente la forme d'une corbeille géométrique non cylindrique.

7. Echangeur géothermique selon l'une quelconque des revendications précédentes **caractérisé en ce que** la couronne (20) est une couronne (20) de tuyau en polymère flexible (PEHD, PERT, PB etc..)

8. Echangeur géothermique selon l'une quelconque des revendications précédentes **caractérisé en ce que** l'un des supports comporte un élément de serrage permettant de venir fixer de manière rigide l'élément de spirale lui correspondant.

## Patentansprüche

1. Geothermischer Wärmetauscher aufweisend eine Wicklung (20) eines spiralförmig angeordneten Rohres, und mit zumindest drei länglichen Trägern (21, 22) versehen, die über ihre Länge eine Reihe von Löchern (99) aufweisen, wobei jedes geeignet ist, von einem einzelnen Spiralteil (20) gekreuzt zu werden, um eine vollständige, stabile Struktur zu erzeugen, **gekennzeichnet dadurch, dass** die Träger (21, 22) ein gleitenden Haltekontakt entlang der Spirale bewirken, so dass die Träger (21, 22) in zwei Gruppen, jeweils rechts und links, geteilt sind, um die Struktur faltbar zu machen.

2. Geothermischer Wärmetauscher nach Anspruch 1, **dadurch gekennzeichnet, dass** zwei einzelne Träger (21, 22), die 180° zueinander ausgerichtet sind, einen nicht-gleitenden Haltekontakt bewirken, während die anderen Träger (21, 22) relativ zu den Spiralteilen gleiten können, denen sie zugeordnet sind.

3. Geothermischer Wärmetauscher nach einem der Ansprüche 1 oder 2, **dadurch gekennzeichnet, dass** die Anzahl der Träger (21, 22) drei ist.

4. Geothermischer Wärmetauscher nach einem der Ansprüche 1 oder 2, **dadurch gekennzeichnet, dass** die Anzahl der Träger (21, 22) vier ist.

5. Geothermischer Wärmetauscher nach einem der vorhergehenden Ansprüche, **dadurch gekennzeichnet, dass** die Wicklung (20) eine im wesentlichen zylindrische Form hat.

6. Geothermischer Wärmetauscher nach einem der Ansprüche 1 bis 4, **dadurch gekennzeichnet, dass** sie die Form eines nicht-zylindrischen geometrischen Korbs hat.

7. Geothermischer Wärmetauscher nach einem der vorhergehenden Ansprüche, **dadurch gekennzeichnet, dass** die Wicklung (20) eine Wicklung (20) aus flexiblen Polymerrohren (PEHD, PERT, PB, usw.) ist.

8. Geothermischer Wärmetauscher nach einem der vorhergehenden Ansprüche, **dadurch gekennzeichnet, dass** einer der Träger ein Klemmelement aufweist, um fest das hierzu entsprechende Spiralelement zu fixieren.

## Claims

1. A geothermal heat exchanger comprising a coil (20) of pipe arranged in spirals, and having at least three elongate supports (21, 22) having on their length a series of holes (99) each adapted to be crossed by an elementary spiral (20) so as to produce a complete stable structure, **characterized in that** said supports (21, 22) achieve a sliding holding contact along the spiral so as to share the supports (21, 22) in two groups, respectively right and left, so as to make the structure foldable.

2. The geothermal heat exchanger according to claim 1 **characterized in that** two particular supports (21, 22), oriented 180 degrees from each other, realize a non sliding holding contact while the other supports (21, 22) can slide with respect to the parts of the spirals to which they are associated.

3. The geothermal heat exchanger according to one of claims 1 or 2 **characterized in that** the number of supports (21, 22) is three.

4. The geothermal heat exchanger according to one of claims 1 or 2 **characterized in that** the number of supports (21, 22) is four.

5. The geothermal exchanger according to one of the preceding claims, **characterized in that** the coil (20) is of substantially cylindrical shape.

6. The geothermal exchanger according to any one of claims 1 to 4 **characterized in that** it has the form of a non-cylindrical geometric basket.

7. The geothermal exchanger according to any preceding claim **characterized in that** the coil is made of flexible polymer (HDPE, PERT, PB etc ..)

8. The geothermal exchanger according to any preceding claim **characterized in that** one of the supports comprises a clamping member to come rigidly fixing the spiral element corresponding thereto.
